# FASCICULE DE BREVET EUROPEEN

(11) **EP 3 245 443 B1**
(45) Date de publication et mention de la délivrance du brevet: **24.03.2021**
(21) Numéro de dépôt: 16700759.0
(22) Date de dépôt: 15.01.2016
(51) Int. Cl.: F21V 8/00, B60Q 1/00, F21S 8/00, F21S 41/00, F21S 43/14

(54) **DISPOSITIF LUMINEUX DE VÉHICULE DANS LEQUEL UN GUIDE DE LUMIÈRE SUPPORTE UN AUTRE GUIDE DE LUMIÈRE**
FAHRZEUGBELEUCHTUNGSVORRICHTUNG, IN DER EIN LICHTLEITER EINEN ANDEREN LICHTLEITER UNTERSTÜTZT
VEHICLE LIGHTING DEVICE WHEREIN A LIGHT GUIDE SUPPORTS ANOTHER LIGHT GUIDE

(30) Priorité: 15.01.2015 FR 1550302
(43) Date de publication de la demande: 22.11.2017
(73) Titulaire: VALEO ILUMINACION, 23600 Martos (ES)
(72) Inventeur: DEL CARMEN MONTANO, Maria, 23600 Martos (ES); FUENTES, Manuel, 23600 Martos (ES); MARTINEZ, Juan Manuel, 18014 Granada (ES)
(74) Mandataire: Valeo Visibility
(86) Numéro de dépôt international: PCT/EP2016/050806
(87) Numéro de publication internationale: WO 2016/113405

(56) Documents cités:
- EP-A1- 2 270 389
- DE-A1-102004 047 653
- FR-A1- 2 995 971
- US-A- 5 984 497

## Description

La présente invention se rapporte au domaine des dispositifs lumineux de véhicule automobile, notamment des dispositifs lumineux comprenant des guides de lumière.

En particulier, la présente invention a trait à un dispositif lumineux de véhicule comprenant deux guides de lumière fixés l'une à l'autre de manière à ce que l'un des guides supporte l'autre dans ledit dispositif lumineux.

Le document JP2012190761 divulgue un dispositif lumineux de véhicule, dans lequel un guide intermédiaire transmet un flux lumineux selon sa longueur. Ce guide intermédiaire porte des guides terminaux et comprend également des prismes pour rediriger certains rayons de ce flux à l'intérieur de ces guides terminaux.

Cependant les degrés de liberté d'orientation du guide intermédiaire et des guides terminaux sont limités. Des orientations précises doivent être respectées pour agencer ces différents guides terminaux en les fixant au guide principal pour pouvoir les relier. De plus l'angle d'incidence des guides terminaux au guide principal est divulgué comme devant respecter un angle précis.

Le problème technique que vise à résoudre l'invention est donc de trouver un agencement de guides de lumière, dont l'un porte l'autre, permettant une plus grande liberté de réalisation, notamment d'orientation de ces guides les uns par rapport aux autres.

A cet effet, un premier objet de l'invention est un dispositif lumineux de véhicule comprenant un premier guide de lumière et un deuxième guide de lumière, destinés à émettre chacun au moins une partie d'une fonction lumineuse, ces deux guides étant deux pièces distinctes, ledit premier guide de lumière comprenant:
- une partie principale de guidage de lumière comprenant un dioptre d'entrée destiné à recevoir des rayons de lumière d'une source lumineuse et un dioptre de sortie principal notamment en avant du dioptre d'entrée, la partie principale de guidage étant agencée de manière à ce qu'une première partie des rayons de lumière traversant le dioptre d'entrée soient guidés jusqu'au dioptre de sortie principal, et le traversent par exemple,
- une partie de fixation fixant cette partie principale au deuxième guide de lumière et s'étendant entre cette partie principale et le deuxième guide de manière à ce que l'un des guides supporte l'autre dans ledit dispositif lumineux.

Ainsi, le deuxième guide de lumière présente plus de degrés de libertés par rapport à la partie de fixation du premier guide, et par conséquent par rapport au premier guide lui-même. Notamment, il est possible d'orienter la partie principale de guidage des guides de lumière parallèlement l'une à l'autre.

Le dispositif lumineux selon l'invention peut optionnellement présenter une ou plusieurs des caractéristiques suivantes :
- la partie de fixation est venue de matière en une seule pièce avec la partie principale de guidage ; cela permet une réalisation plus simple, la partie de fixation étant déjà positionnée par rapport à l'un des guides ;
- la partie de fixation du premier guide de lumière et le deuxième guide de lumière sont emboîtées l'un dans l'autre ; cette fixation est simple à réaliser, notamment elle facilite le moulage des fixations ;
- une vis traverse les parties emboitées dudit deuxième guide de lumière et de la partie de fixation du premier guide de lumière ; ceci permet d'assurer la fixation ;
- le deuxième guide de lumière comprend également une partie principale de guidage de lumière comprenant un dioptre d'entrée destiné à recevoir des rayons de lumière d'une autre source lumineuse et un dioptre de sortie principal situé notamment en avant du dioptre d'entrée, la partie principale de guidage étant agencée de manière à ce qu'une première partie des rayons de lumière traversant le dioptre d'entrée soit guidée jusqu'au dioptre de sortie principal, et le traverse par exemple ; cela laisse davantage de degrés de liberté car le deuxième guide de lumière peut recevoir les rayons lumineux d'une source de lumière lui étant spécialement dédiée ; il n'y a donc pas besoin de respecter une certaine orientation des deux guides de lumière l'un par rapport à l'autre pour que des rayons lumineux passent du premier guide au deuxième guide de lumière ;
- le deuxième guide de lumière comprend également une partie de fixation fixée au premier guide de lumière ;
- la partie de fixation du deuxième guide de lumière est fixée à la partie de fixation du premier guide de lumière ; les degrés de liberté de fixation d'un guide à l'autre sont donc les mêmes que ceux de la fixation de ces deux parties de fixation ; autrement dit l'orientation des deux guides peut se faire indépendamment bien que l'un d'eux porte l'autre ;
- la ou les parties de fixation comprennent un moyen de fixation assurant la fixation de la partie de fixation correspondante ;
- la partie de fixation de l'un des guides de lumière comprend une oreille ou un fût de réception, la partie de fixation de l'autre des guides de lumière comprenant un tenon ou un fût apte à s'emboiter dans ladite oreille ou ledit fût de réception ; il s'agit de moyens simples pour réaliser des moyens de fixation par moulage ;
- une tige de fixation, notamment d'une vis ou d'un rivet traverse à la fois ladite oreille ou ledit fût de réception et ledit tenon ou ledit fût apte à s'emboiter ;
- pour l'un ou pour chaque guide de lumière, ladite partie de fixation est venue de matière avec le guide comprenant cette partie de fixation ;
- la ou lesdites parties de fixation forment des parties secondaires de guidage de lumière, la partie principale de guidage et la partie de fixation du premier guide de lumière et/ou du deuxième guide de lumière étant agencées de manière à ce qu'une deuxième partie des rayons lumineux traversant le dioptre d'entrée du guide correspondant soient guidés à l'intérieur de la partie de fixation correspondante, cette dernière comprenant des moyens de découplage répartis le long d'une portion de découplage de cette partie de fixation de manière à ce que des rayons s'échappent le long de celle-ci ; cela permet également d'utiliser cette partie de fixation pour étendre la surface éclairante des fonctions lumineuses et/ou pour illuminer le dispositif lumineux ;
- la ou les parties de fixation forment au moins un décrochement entre la portion de découplage et le moyen de fixation du même guide de lumière ; ce décrochement permet une fuite contrôlée des rayons au niveau de ce décrochement, et de choisir où les rayons vont pouvoir s'en aller ;
- un occulteur est positionné en avant du ou des moyens de fixation du ou desdits guides de lumière de manière à occulter ce ou ces moyens de fixation pour un observateur extérieur audit dispositif lumineux ;
- le décrochement et l'occulteur sont agencés de manière à ce que les rayons sortant au niveau du décrochement et entre le décrochement et le moyen de fixation soient occultés par l'occulteur ; ceci est particulièrement avantageux dans le cadre de l'invention, car la fixation est déportée par une partie secondaire diffusante et les rayons restants parvenant à son extrémité seront absorbés par cet occulteur ;
- pour un ou pour chaque guide de lumière la partie principale de guidage de ce guide comprend une portion de réflexion apte à réfléchir ladite deuxième partie des rayons de lumière vers et jusqu'à l'intérieur de ladite partie secondaire de guidage de ce guide ; il s'agit d'un mode de réalisation pour dévier une partie des rayons lumineux dans la partie secondaire de guidage ;
- pour un ou pour chaque guide, ladite portion de réflexion forme un rétrécissement de la partie principale de guidage correspondante de sorte qu'elle intercepte une partie des rayons lumineux provenant du dioptre d'entrée ; ce mode permet de réaliser simplement la portion de réflexion ;
- pour un ou pour chaque guide, ladite partie principale de guidage comprend :
   o une portion amont s'étendant du dioptre d'entrée à ladite portion de réflexion,
   o une portion aval, s'étendant de ladite portion de réflexion vers le dioptre de sortie principal, la portion aval présentant une épaisseur inférieure à celle de la portion amont ;
   cela permet de réaliser plus facilement le rétrécissement ;
- l'arrière de la partie de fixation correspondante se joint à ladite portion amont en formant un angle aigüe, vu depuis l'extérieur du guide, et l'avant de cette partie de fixation de guidage se joint à ladite portion amont en formant une courbe dont la corde forme un angle obtus avec ladite portion aval, vu depuis l'extérieur du dispositif lumineux ;
- la portion de réflexion est formée par un pan incliné ;
- la portion de réflexion est en vis-à-vis de ladite zone de jonction ;
- chaque partie de fixation est courbée et est, vue de l'extérieur du guide, concave à l'avant et convexe à l'arrière ;
- les parties de fixation forment un arc de cercle ;
- il comprend une enveloppe formée par un boîtier et une glace de fermeture du boîtier, l'un des guides de lumière étant supporté dans le boitier par l'autre guide de lumière ;
- il comprend la ou les source (s) de lumière, notamment une ou des diode(s) lumineuse(s) électroluminescente(s), agencée(s) de manière à émettre des rayons lumineux au travers du ou des dioptre(s) d'entrée ;
- pour chacun desdits premier et deuxième guides de lumière, une première partie des rayons de lumière forme, en sortant du dioptre principal de sortie du guide de lumière correspondant, une partie ou la totalité d'une fonction de signalisation et/ou d'éclairage de la route, notamment d'un feu stop, d'un indicateur de direction et/ou d'un feu de recul ;
- la partie de fixation comprend des moyens de découplage répartis le long de cette partie secondaire de découplage de manière à ce que des rayons s'échappent le long de celle-ci, ces rayons formant un halo d'illumination de l'intérieur de ladite enveloppe ; cela permet de conférer une signature de nuit permettant de voir les composants optiques et le ou les masques du dispositif lumineux de nuit ; cela est particulièrement intéressant dans des réalisations selon lesquelles le dispositif lumineux de véhicule est un dispositif de signalisation, tel qu'un feu arrière, ou un dispositif d'éclairage de la route, tel qu'un projecteur ;
- il comprend un masque recouvrant partiellement la partie principale de guidage du premier guide de lumière ; la portion de réflexion de ce guide peut être agencée de manière à ce que sa surface externe forme une butée sur laquelle ledit masque est positionné ; on minimise ainsi le nombre de portions particulières à mouler, ce qui permet de simplifier le moulage des pièces, notamment du premier guide de lumière, mais également le nombre de positionnements à réaliser lors de l'assemblage du dispositif lumineux de véhicule ;
- pareillement ou alternativement le dispositif peut comprendre un masque recouvrant partiellement la partie principale de guidage du deuxième guide de lumière ; la portion de réflexion de ce guide peut être agencée de manière à ce que sa surface externe forme une butée sur laquelle ledit masque est positionné ;
- le ou lesdits masque(s) est (sont) formé(s) par un manchon dans lequel la partie principale de guidage correspondante est emmanchée ; le premier guide et/ou le deuxième guide de lumière servent ainsi également de positionnement précis au(x) masque(s) ; selon un exemple de réalisation, le ou les masques comprennent une forme complémentaire en contact avec la surface externe de la portion de réflexion correspondante ; on réalise ainsi simplement le positionnement du ou des masques lorsqu'ils sont emmanchés ;
- le ou les manchons comprennent une contre-forme complémentaire de et en contact avec la surface externe de la portion de réflexion correspondante ;
- le dispositif lumineux de véhicule est un feu de signalisation, notamment un feu arrière de véhicule, un dispositif d'éclairage de la route, notamment un projecteur, ou encore un dispositif d'éclairage de l'intérieur de l'habitacle d'un véhicule, notamment un plafonnier ou une applique.

Un autre objet de l'invention est un véhicule comprenant un guide de lumière et/ou un dispositif lumineux selon l'invention.

Les termes « amont » et « aval » dans la présente demande se réfèrent au sens de cheminement, le long d'une partie de guidage de lumière, des rayons provenant de la source de lumière.

Les termes « avant » et « arrière » se réfèrent au sens d'émission de lumière depuis le dioptre d'entrée de la partie principale de guidage jusqu'à son dioptre de sortie principal.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- La figure 1 représente un détail de la figure 2.
- La figure 2 représente un dispositif lumineux de véhicule selon l'invention.
- La figure 3 représente un détail d'un guide de lumière selon un mode de réalisation appliqué dans le dispositif de l'invention, notamment de la jonction entre la partie principale de guidage et la partie secondaire de guidage, vu en perspective.
- La figure 4 représente un guide de lumière selon une variante de réalisation de la jonction entre la partie principale de guidage et la partie secondaire de guidage illustrée en figure 3, vu en perspective.
- La figure 5 représente une section longitudinale des guides de lumière des figures 4 ou 5.

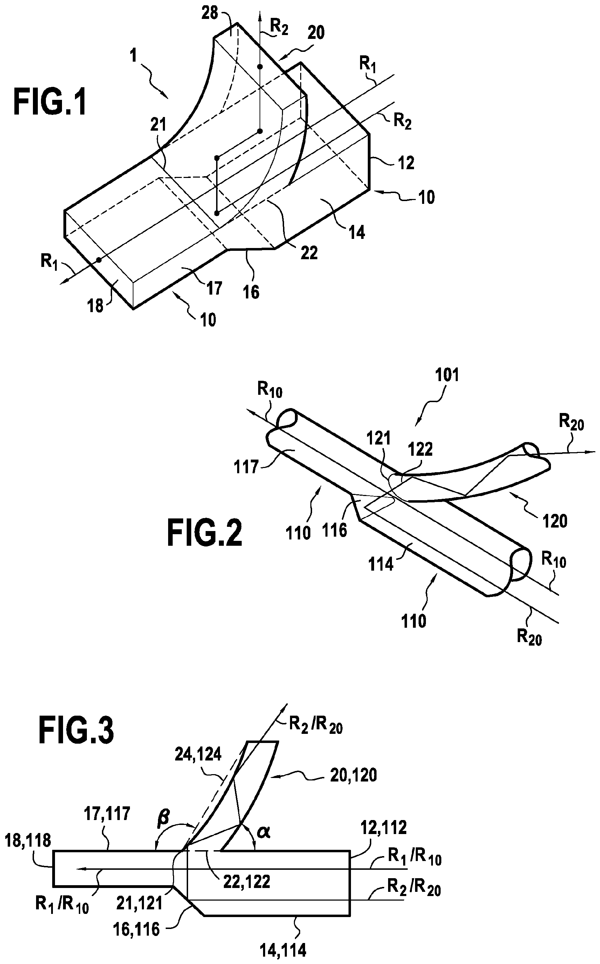

Les figures 1 et 2 illustrent un dispositif lumineux 260 de véhicule selon l'invention.

Ce dispositif lumineux 260 comprend un boitier 262 et une glace de fermeture 264, qui ferme une ouverture avant du boîtier 262. Le boitier 262 et la glace de fermeture 264 délimitent ainsi une enveloppe 261 du dispositif lumineux 260. Cette glace de fermeture 264 est en matériau transparent et peut être en polymère ou en verre.

Un premier guide de lumière 201 est placé à l'intérieur de cette enveloppe 261. Tel qu'illustré, il est supporté dans ce boitier 262 par un deuxième guide de lumière 201', ce dernier étant fixé au boitier, notamment à la paroi supérieure du boitier.

Alternativement, le dispositif lumineux peut être réalisé de manière à ce que le deuxième guide de lumière 201' repose sur le premier guide de lumière 201 et soit donc porté par ce dernier, ce premier guide de lumière 201 pouvant par exemple être fixé sur la paroi inférieure du boitier 262.

Comme illustré en figure 1, selon un exemple de réalisation de l'invention, le premier guide de lumière 201 comprend une partie principale de guidage 210 fixée au moyen d'une partie de fixation formée par une partie secondaire de guidage 220 de lumière, cette partie de fixation formant une patte de fixation. En d'autres termes, le premier guide de lumière 201 présente une patte de fixation à l'intérieur de laquelle se propagent des rayons lumineux R₂ et R₃, et est donc également une partie de guidage de lumière.

Le premier guide de lumière 201 est agencé de manière à permettre la propagation de la lumière dans cette partie principale 210, par exemple par réflexion interne, depuis un dioptre d'entrée 212 jusqu'à un dioptre de sortie principal 218.

Le premier guide de lumière 201 est destiné à recevoir des rayons lumineux R₁, R₂, R₃ d'une source de lumière 251. Ces rayons R₁, R₂ traversent d'abord le dioptre d'entrée 212, de la partie principale de guidage 210, et se propagent ensuite à l'intérieur d'une première portion, dite portion amont 214, de la partie principale de guidage 210. Cette portion amont 214 s'étend depuis le dioptre d'entrée 212, jusqu'à une portion de réflexion 216, et jusqu'à une zone de jonction 222 de la partie principale de guidage 210 et de la partie de fixation 220.

Dans l'alignement de cette portion amont 214, la partie principale de guidage 210 se prolonge en aval de la portion de réflexion 216 par une portion aval 217. Cette dernière se termine par le dioptre de sortie principal 218.

Cette portion de réflexion 216 permet d'intercepter une deuxième partie de rayons R₂, R₃, la première partie de rayons R₁, étant celle qui n'est pas interceptée.

Ainsi, la première partie des rayons R₁ va passer dans la partie principale de guidage 210, à côté de cette portion de réflexion 216, et se propager dans la portion aval 217, jusqu'au dioptre de sortie principal 218.

Le guide de lumière 201 est par exemple agencé pour que ces rayons lumineux R₁ soient la majorité des rayons R₁ et R₂, R₃, reçus par le dioptre d'entrée 212, de sorte que le guide de lumière 201 puisse réaliser, seul ou en partie, un faisceau lumineux de signalisation ou d'éclairage de la route.

En revanche, la deuxième partie de rayons R₂, R₃, va rencontrer la portion de réflexion 16, 116 et être réfléchie par celle-ci. La portion de réflexion est agencée de manière à renvoyer ces rayons R₂, R₃ vers la zone de jonction 222 des deux parties de guidage. Ils vont donc ensuite entrer dans la partie de fixation 220, qui forme également la partie secondaire de guidage. Cette portion de réflexion 216 et la partie secondaire de guidage 220 sont notamment agencées de manière à ce que cette deuxième partie de rayons R₂, se propage ensuite le long de la partie secondaire de guidage 220.

La partie de guidage secondaire 220, et donc la patte de fixation du guide de lumière 201, comprend une portion de fixation 229 comprenant un moyen de fixation, formé dans cet exemple par un premier fût 227 dans lequel s'emboite un tenon 227' de forme complémentaire. Ce tenon 227' provient du deuxième guide de lumière 201'.

Le tenon 227' est également en forme de fût et présente un trou central aligné avec le trou traversant du premier fût 227. Une vis 234 passe au travers du premier fût 227 et se visse dans le tenon 227'.

De ce fait, la patte de fixation/partie secondaire de guidage 220, et donc le premier guide de lumière 201, est fixée dans le dispositif lumineux 260, le deuxième de guide de lumière 201' servant de support au premier guide de lumière 201.

La partie de fixation 220 de ce premier guide de lumière 201 présente une portion de découplage.

Telle qu'illustrée en figure 1, la portion de découplage est située entre la portion de fixation 229 et la zone de jonction 222. Elle comprend sur sa face arrière des moyens de découplage, formés notamment par des prismes 200. Les rayons R₂, R₃ interceptés et réfléchis par une portion de réflexion 216, vont être déviés vers la zone de jonction 222, traverser cette dernière et entrer dans la partie de fixation 220, puis se propager dans cette portion de découplage par réflexion interne sur ses parois. Cependant au fur et à mesure de leur progression, certains de ces rayons R₃ rencontreront des moyens de découplage, notamment des faces des prismes 200, agencés pour les renvoyer vers la face avant 223 de la portion de découplage, avec un angle tel qu'ils sortiront de la partie de fixation/partie secondaire de guidage 220 au travers de cette face avant 223.

Ces prismes 200 sont répartis le long ou sur l'étendue de la portion de découplage de la partie de fixation, ou partie secondaire de guidage 220, par exemple sur l'étendue la face arrière de la portion de découplage de la partie secondaire de guidage 220, ces prismes réfléchissant dans ce cas les rayons vers la face avant 223. Ainsi la face avant 223 de cette portion de découplage va rayonner sur toute sa longueur, ou sur toute l'étendue de cette face avant 223, et générer de ce fait un halo lumineux.

Cette face avant 223 de la portion de découplage est concave vue de l'extérieur, sa concavité étant tournée vers la glace de fermeture 264. Cela va permettre de générer un halo lumineux dans l'espace avant 265 du dispositif lumineux 260, situé entre la portion de découplage et la glace de fermeture 264. Cela va ainsi créer une illumination diffuse des éléments optiques et de masques 240, 240', en avant de cette portion de découplage.

Ces éléments optiques et ces masques sont visibles de jour au travers de la glace de fermeture. Selon les réalisations incluant les portions de découplage, comme l'exemple illustré, ils vont être également visibles de nuit. Leurs formes pourront donc être également utilisées pour une signature de nuit.

Le deuxième guide de lumière 201' présente également une partie principale de guidage 210' d'où s'étend une partie de fixation 220'. Cette partie principale de guidage et cette partie de fixation se joignent au niveau d'une zone de jonction 222' .

Cette partie de fixation 220' du deuxième guide de lumière 201' peut également former une partie secondaire de guidage, comme dans le cas du premier guide de lumière 201. Tel est le cas dans l'exemple illustré.

En vis-à-vis de la zone de jonction 222' du deuxième guide de lumière 201' est agencé un pan incliné 216', pour renvoyer dans la partie secondaire de guidage 220' une partie de l'ensemble des rayons R_{1'} arrivant depuis le dioptre d'entrée 212' du deuxième guide de lumière 201'. Le pan est incliné en ce sens qu'il forme un angle non-nul par rapport à la direction d'extension de la partie principale du guide de lumière.

Cette partie de fixation ou partie secondaire de guidage 220' comprend également sur sa face arrière des moyens de découplage 200', répartis le long d'une portion de découplage compris entre le tenon 227' et la zone de jonction 222' du deuxième guide de lumière 201'.

Cette portion de découplage de la partie de fixation 220' du deuxième guide de lumière 201' a également une forme concave tournée vers la glace de fermeture 264 et génère également un halo lumineux du même type que celui généré par le premier guide de lumière 201.

Dans cet exemple de réalisation, le premier guide de lumière 201 est situé en dessous du deuxième guide de lumière 201', selon un axe vertical. Les parties de fixation, ou parties secondaires de guidage 220 et 220', partent depuis les zones de jonctions correspondantes 222, 222' vers l'arrière, en se recourbant vers le haut, pour le premier guide de lumière 201, et vers l'arrière, en se recourbant vers le bas, pour le deuxième guide de lumière 201'. Cela va permettre de générer respectivement un halo lumineux vers le haut et vers l'avant et un halo lumineux vers le bas et vers l'avant. De façon globale, l'intégralité de l'espace avant 265 sera illuminée. Il est même possible de placer des éléments, tels que des masques, ou encore des éléments optiques, dans cet espace avant 265 en conservant un halo lumineux diffusant autour de ceux-ci.

Pour renforcer cet aspect, les portions de découplage de ces deux guides de lumière 201 et 201' sont agencées de manière à former ensemble une unique concavité tournée vers la glace de fermeture 264.

Pour cacher la fixation entre le fût 227 et le tenon 227', il est possible de placer un occulteur avec une partie d'occultation 230 en avant de ce fût 227 et de ce tenon 227'. Selon l'exemple de réalisation illustré, cet occulteur présente un passage 231, tel qu'un trou traversant ou une encoche, à travers lequel le tenon 227' est relié à la portion de découplage de la partie secondaire de guidage 220' du deuxième guide de lumière 201'. En arrière de ce passage, l'occulteur présente une oreille 232 dont le trou traversant est traversé par la vis de fixation 234, et enserré entre le fût 227 du premier guide de lumière et la tête de la vis 234.

De manière générale et au-delà de l'exemple illustré, la patte de fixation du premier guide de lumière, la patte de fixation du deuxième guide de lumière et l'occulteur se fixent selon un empilement linéaire, notamment en comprenant chacun un orifice, leurs orifices étant traversés par un unique moyen de fixation, tel qu'une vis.

Selon un exemple de réalisation, chaque partie secondaire de guidage 220, 220' de ces guides de lumière 201, 201' présente une branche 226, 226' entre la portion de découplage correspondante et respectivement le fût de fixation 227 et le tenon de fixation 227'. Le passage d'une de ces portions de découplage à la branche 226, 226' correspondante forme un décrochement ou arête 225, 225'. Les rayons R₂ guidés par les deuxième parties de guidages 220, 220' jusqu'à ces décrochements 225, 225' ou jusqu'à ces branches correspondantes 226, vont être susceptibles de sortir du guide de lumière 201, 201'. En l'absence d'occulteur, non seulement ils risquent de sortir de manière non contrôlée, mais encore sortant par la tranche, ils risquent de créer un spot lumineux indésirable. L'occulteur précédemment décrit permet d'occulter ces rayons R₂.

En particulier, dans l'agencement illustré en figures 1 et 2, la partie d'occultation 230 présente une face verticale et une face horizontale permettant d'occulter les rayons indésirables.

Dans le mode de réalisation illustré en figures 1 et 2, la majorité des rayons lumineux entrant dans les guides de lumières 201 et 201' sortent par leurs dioptres de sortie 218 et 218', situés à l'extrémité de leurs portions aval 217, 217'. Dans cet exemple, ceux-ci vont permettre la génération d'un faisceau de feu de signalisation, en particulier permettre de respecter la répartition et l'intensité lumineuse, encore appelée photométrie, d'un faisceau de signalisation, notamment un feu stop, ou encore d'un feu stop pour le premier guide 201 et d'un feu de recul pour le deuxième guide 201'.

Comme dans l'exemple illustré, l'invention permet d'agencer les guides de lumière 201 et 201' de manière à ce que leurs parties principales de guidage 210 et 210' soient parallèles, ou que les directions globales d'émission de leurs faisceaux lumineux au travers de leur dioptres de sortie 218 et 218' soient parallèles. Cela est particulièrement utile lorsque les faisceaux issus de ces parties principales participent à des fonctions de signalisation, et d'autant plus utile s'ils réalisent ensemble la même fonction de signalisation.

Ces dioptres de sortie 218 et 218' peuvent également comprendre des billages pour disperser les rayons lumineux autour de la direction globale d'émission du faisceau et ainsi élargir celui-ci.

Pour des raisons esthétiques, les portions avals 217, 217' des parties principales de guidages 210, 210' sont recouvertes d'un masque 240, 240'. Ce dernier est en forme d'un manchon, emmanché sur la portion aval correspondante 227, 227'.

Ce masque présente un décrochement 242, 242', apte à venir en butée contre le rétrécissement formant la portion de réflexion 216, 216'. Dans cet exemple, les portions de réflexion 216, 216' étant des pans inclinés, les décrochements des masques 242, 242', sont également des pans inclinés. Cela permet de créer une limite à l'emmanchement de ces masques 240, 240' et de les positionner. En figure 2, seul le masque 240' du deuxième guide de lumière 201' est emmanché jusqu'au bout.

Les portions aval 227, 227' dépassent de ces manchons. Cela n'est pas nécessaire du moment que leurs faisceaux lumineux peuvent en sortir mais c'est plus simple à réaliser.

Les côtés de ces masques 240, 240', orientés vers le centre de l'espace avant 265, à savoir dans cet exemple, le côté supérieur du masque 240 du premier guide de lumière 201 et le côté inférieur du masque 240' du deuxième guide de lumière 201', vont pouvoir être éclairés par le halo lumineux. Pour renforcer l'effet diffus du halo, il est possible d'agencer ces côtés de manière à les rendre réfléchissants, par exemple en les aluminant, ou à les rendre diffusants.

Selon un mode de réalisation, le masque 240' du deuxième guide comprend une partie, supérieure dans cet exemple de réalisation, qui couvre également la portion amont 214' de la partie principale de guidage 210'. Ce masque 240' ne couvre que la face supérieure de la portion amont 214' mais pas la face opposée, ici la face inférieure, de la portion amont 214' pour permettre un emmanchement facile de ce masque 240' sur la portion aval du deuxième guide 201'. Il est cependant possible d'utiliser un masque supplémentaire et rapporté 270, pour masquer cette face opposée.

Le masque 240' peut comprendre une ouverture 244' et la portion amont 214' peut comprendre des moyens de découplage, tel que des prismes et/ou des stries (non représentés), en vis-à-vis de cette ouverture 244'. Ces moyens de découplage sont agencés pour découpler une autre partie des rayons lumineux guidés dans la portion amont 214' de la partie principale de guidage 210', de manière à ce qu'ils sortent par cette ouverture 244'. Ainsi, un halo lumineux supplémentaire va être créé dans l'enveloppe 261 du dispositif lumineux de véhicule 260.

Dans l'exemple illustré de la figure 2, ce halo lumineux supplémentaire rayonne entre le deuxième guide de lumière 201' et la paroi supérieure du boitier 262.

Les sources de lumière peuvent être des diodes électroluminescentes 251, 254, encore appelées DEL ou bien LED. Elles sont agencées en vis-à-vis des dioptres d'entrée 212, 212' des guides de lumière 201 et 201'. Elles sont portées par des cartes électroniques 252, 255, notamment reliées à une alimentation électrique via des connecteurs 253, 256.

Les dioptres d'entrés 212, 212' peuvent être agencés de manière à diminuer l'angle d'ouverture du faisceau de rayons lumineux les traversant. Par exemple, ils peuvent former un collimateur. Par exemple, ils peuvent présenter des portions paraboliques dont le foyer passe par l'élément photoémissif de la LED 251, 254 correspondante.

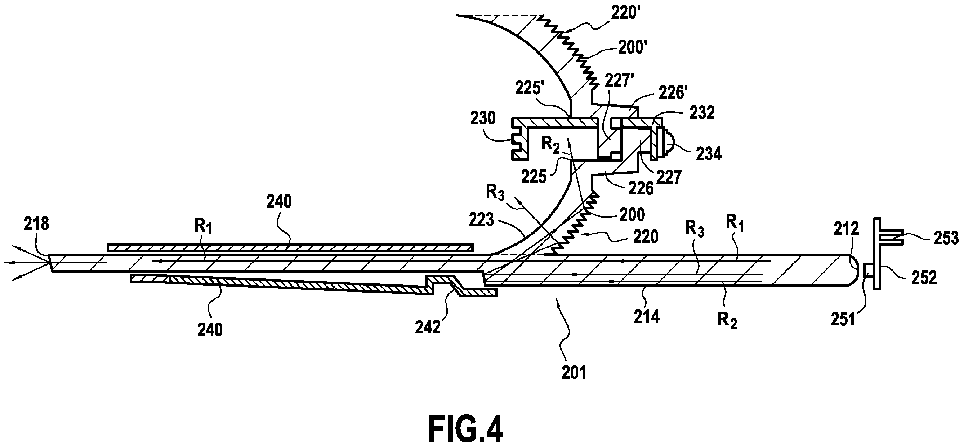

Les figures 3 et 4 illustrent un exemple de réalisation de la jonction entre la partie principale et la partie secondaire d'un guide de lumière 1, 101, 201 et 201' du dispositif lumineux illustré en figures 1 et 2. Elles permettent également d'illustrer la forme globale des guides de lumière du dispositif lumineux selon l'invention.

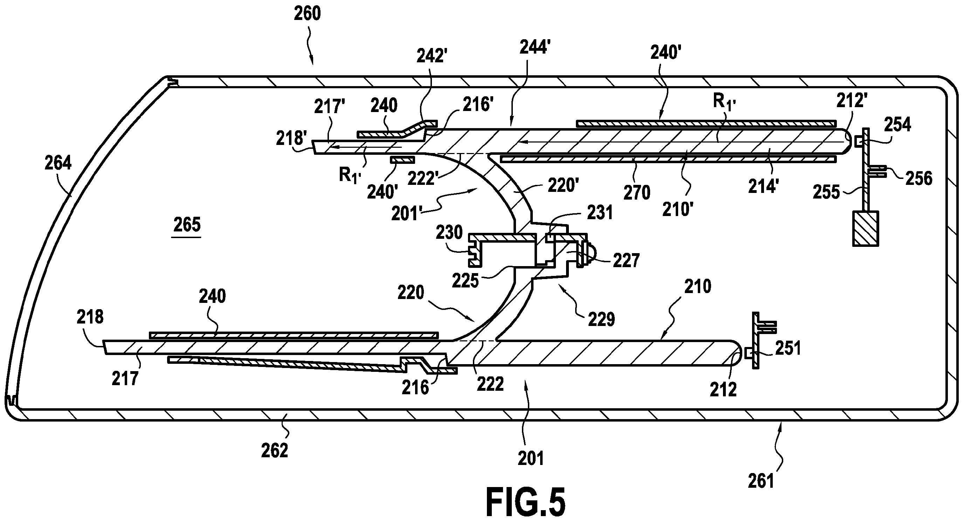

Comme décrit précédemment, chacun des guides de lumière du dispositif lumineux selon l'invention comprend une partie principale de guidage de lumière 10, 110 et une partie de fixation 20, 120, se joignant en une zone de jonction 22, 122. La forme des sections de ces guides de lumière selon un axe longitudinal allant de leur dioptre d'entrée 12, 112, à leur dioptre de sortie principal 18, 118, est similaire, et est illustrée en figure 5.

La partie de fixation du guide de lumière 20, 120, forme une partie secondaire de guidage de lumière (la fixation n'est pas représentée sur les figures 3 à 5).

Le guide de lumière de la figure 3 est un guide de lumière formé de plaques, à savoir que sa partie principale de guidage 10 comprend des portions amont 14 et aval 17 planes. Ces portions amont 14 et aval 17 de la partie principale de guidage de lumière 10 comprennent chacune deux faces étendues jointes entre elles et délimitées par une tranche périphérique. Ces faces étendues peuvent permettre la propagation de la lumière dans cette partie principale 10, par exemple par réflexion interne, depuis le dioptre d'entrée 12 jusqu'au dioptre de sortie principal 18. Ces faces étendues peuvent être planes, comme illustré sur la figure 3. La section de ces portions selon un plan perpendiculaire à la direction globale d'émission du faisceau lumineux par le guide de lumière, est globalement rectangulaire. De même, la partie secondaire de guidage 20 est en forme de plaque, notamment cintrée.

Le guide de lumière 101 de la figure 4 est un guide de lumière formé de tiges, à savoir que sa partie principale de guidage 110 comprend des portions amont 114 et aval 117 en formes de tiges. Ces portions amont 114 et aval 117 peuvent permettre la propagation de la lumière dans cette partie principale de guidage 110, par exemple par réflexion interne, depuis le dioptre d'entrée 112 jusqu'au dioptre de sortie principal 118. La section de ces portions selon un plan perpendiculaire à la direction globale d'émission du faisceau lumineux par le guide de lumière, peut par exemple être globalement circulaire ou oblongue. De même, la partie secondaire de guidage 120 est en forme de tige, notamment courbée.

Dans ces deux modes de réalisation illustrés en figures 3 et 4, les guides de lumière 1 et 101 sont destinés à recevoir des rayons lumineux R₁, R₂ et R₁₀, R₂₀ d'une source de lumière. Ces rayons R₁, R₂ et R₁₀, R₂₀ traversent d'abord un dioptre d'entrée 12, 112, de la partie principale de guidage 10, 110, et se propagent ensuite à l'intérieur de la portion amont 14, 114, de la partie principale de guidage 10, 110. Cette portion amont s'étend depuis le dioptre d'entrée 12, 112, jusqu'à une portion de réflexion 16, 116, et jusqu'à la zone de jonction 22, 122 des deux parties de guidage 10, 110 et 20, 120.

Dans l'alignement de cette portion amont 14, 114, la partie principale de guidage 10, 110 se prolonge en aval de la portion de réflexion 16, 116 par la portion aval 17, 117. Cette dernière se termine par le dioptre de sortie principal 18, 118.

La portion de réflexion 16, 116, est formée par un pan incliné formant un rétrécissement de la partie principale de guidage 10, 110. Ainsi, comme on peut le voir en figure 5, l'épaisseur de la portion aval 17, 117 est inférieure à celle de la portion amont 14, 114.

Ce rétrécissement est un exemple de réalisation permettant d'intercepter une deuxième partie de rayons R₂, R₂₀, la première partie de rayons R₁, R₁₀, étant celle qui n'est pas interceptée.

La deuxième partie de rayons R₂, R₂₀, en rencontrant la portion de réflexion 16, 116 formée par le rétrécissement, va être réfléchie par celle-ci dans la partie secondaire de guidage 220 pour se propager ensuite le long de cette dernière.

A noter qu'au niveau de la zone de jonction 22, 122, et en aval de celle-ci, les surfaces de la partie principale de guidage 10, 110 et de la partie secondaire de guidage, également partie de fixation du guide de lumière, 20, 120, se joignent selon une arrête aval 21, 121. Les rayons impactant cette arrête aval et la zone immédiatement autour risquent de présenter un angle d'incidence tel qu'ils sortent du guide de lumière 1, 101.

Pour diminuer ce risque, le guide de lumière 1, 101 peut présenter un agencement particulier. Comme on peut l'observer sur les figures 3 à 5, la partie secondaire de guidage, également partie de fixation du guide de lumière, 20, 120, s'étend à partir de la zone de jonction 22, 122, de suite vers l'arrière. Ainsi, l'extension de la partie secondaire de guidage 20, 120 à partir de la partie principale de guidage 10, 110, débute dès cette zone de jonction 22, 122, en ayant dès ce début une orientation vers l'arrière.

Ainsi, lorsqu'observé depuis l'extérieur du guide 1, 101, et depuis l'arrière de celui-ci, la partie secondaire de guidage 20, 120, forme avec la portion amont 14, 114 de la partie principale de guidage 10, 110, un angle α aiguë (c'est-à-dire inférieur à 90°).

En revanche, lorsqu'observé depuis l'extérieur du guide 1, 101, et depuis l'avant de celui-ci, la partie secondaire de guidage, également partie de fixation du guide de lumière, 20, 120, forme avec la portion aval 17, 117 de la partie principale de guidage 10, 110, un angle obtus (c'est à dire supérieur à 90°). Par exemple, lorsque la partie secondaire de guidage 20, 120 est courbée, comme dans ces exemples, elle forme une courbe dont la corde 24, 124 forme un angle obtus β avec ladite portion aval 17, 117, vu depuis l'extérieur du guide.

On diminue ainsi le risque de fuite de certains rayons lumineux et permet d'augmenter les chances de les réorienter dans la partie secondaire de guidage 20, 120.

Cela permet également que certains rayons R₁, R₁₀, passant à côté de la portion de réflexion 16, 116, et qui impacteraient la zone au niveau de l'arrête aval 21, 121, d'être moins sujets à sortir du guide de lumière 1, 101, et de continuer à se propager dans la partie principale de guidage 10, 110, le long de la portion aval 17, 117.

De plus, cet agencement permet de réaliser un retour en arrière des rayons lumineux avec le même guide de lumière, et sans découplage (c'est à dire sans sortie) des rayons de celui-ci.

A noter que la partie secondaire de guidage 20, 120, peut être agencée de manière à utiliser de différentes manières les rayons R₂, R₂₀, qu'elle guide. Par exemple, elle peut être agencée pour que tout ou partie de ces rayons R₂, R₂₀ se propagent jusqu'à l'extrémité 28 de la partie secondaire de guidage, à l'opposé de la zone de jonction 22, 122, et en sortent, notamment pour participer à une fonction de signalisation et/ou d'éclairage de la route. Elle peut alternativement ou cumulativement comprendre des moyens de découplage situés sur ses surfaces arrière et/ou avant, ces moyens de découplage étant agencés de manière à permettre aux rayons les impactant de sortir du guide. Lorsque ces moyens de découplage sont répartis le long de la partie secondaire de guidage, également partie de fixation du guide de lumière, 20, 120, ils permettent aux rayons de sortir sur toute l'étendue de ses surfaces arrière et/ou avant.

## Revendications

1. Dispositif lumineux (260) de véhicule comprenant un premier guide de lumière (201) et un deuxième guide de lumière (201'), destinés à émettre chacun au moins une partie d'une fonction lumineuse, ces deux guides étant deux pièces distinctes, ledit premier guide de lumière comprenant:
- une partie principale de guidage (210) de lumière comprenant un dioptre d'entrée (212) destiné à recevoir des rayons de lumière d'une source lumineuse (251) et un dioptre de sortie principal (218), la partie principale de guidage étant agencée de manière à ce qu'une partie des rayons de lumière (R₁) traversant le dioptre d'entrée soit guidée jusqu'au dioptre de sortie principal,
- une partie de fixation (220) fixant cette partie principale au deuxième guide de lumière (201') et s'étendant entre cette partie principale et le deuxième guide de manière à ce que l'un des guides supporte l'autre dans ledit dispositif lumineux.

2. Dispositif lumineux de véhicule selon la revendication 1, dans lequel la partie de fixation (220) est venue de matière en une seule pièce avec la partie principale de guidage (210).

3. Dispositif lumineux de véhicule selon la revendication 1 ou 2, dans lequel la partie de fixation (220) du premier guide de lumière (201) et le deuxième guide de lumière (201') sont emboîtées l'un dans l'autre.

4. Dispositif lumineux de véhicule selon l'une des revendications 1 à 3, dans lequel le deuxième guide de lumière (201') comprend également une partie principale de guidage (210') de lumière comprenant un dioptre d'entrée (212') destiné à recevoir des rayons de lumière d'une autre source lumineuse (254) et un dioptre de sortie principal (218'), cette partie principale de guidage (210') étant agencée de manière à ce qu'une première partie des rayons (R_{1,}) de lumière traversant le dioptre d'entrée soit guidée jusqu'au dioptre de sortie principal.

5. Dispositif lumineux de véhicule selon la revendication 4, dans lequel le deuxième guide de lumière (201') comprend également une partie de fixation (220') fixée au premier guide de lumière (201).

6. Dispositif lumineux de véhicule selon la revendication 5, dans lequel la partie de fixation (220') du deuxième guide de lumière (201') est fixée à la partie de fixation (220) du premier guide de lumière (201).

7. Dispositif lumineux de véhicule selon la revendication 6, dans lequel la partie de fixation (220) de l'un (201) des guides de lumière comprend une oreille ou un fût de réception (227), la partie de fixation (220') de l'autre (201') des guides de lumière comprenant un tenon ou un fût apte à s'emboiter (227') dans ladite oreille ou ledit fût de réception (227).

8. Dispositif lumineux de véhicule selon la revendication 7, dans lequel une tige de fixation (234) traverse à la fois ladite oreille ou ledit fût de réception (227) et ledit tenon ou ledit fût apte à s'emboiter (227').

9. Dispositif lumineux de véhicule selon l'une des revendications précédentes, dans lequel pour l'un ou pour chaque guide de lumière (201, 201'), ladite partie de fixation (220, 220') est venue de matière avec le guide comprenant cette partie de fixation.

10. Dispositif lumineux de véhicule selon la revendication 9, dans lequel la ou lesdites parties de fixation (220, 220') forment des parties secondaires de guidage de lumière, la partie principale de guidage (210, 210') et la partie de fixation (220, 220') du premier guide de lumière (201) et/ou du deuxième guide de lumière (201') étant agencées de manière à ce qu'une deuxième partie des rayons lumineux (R₂ ; R₃) traversant le dioptre d'entrée du guide correspondant (212, 212') soit guidée à l'intérieur de la partie de fixation correspondante (220, 220'), cette dernière comprenant des moyens de découplage (200, 200') répartis le long d'une portion de découplage de cette partie de fixation (220, 220') de manière à ce que des rayons (R₃) s'échappent le long de celle-ci.

11. Dispositif lumineux selon la revendication 10, dans lequel la ou les parties de fixation (220, 220') comprennent un moyen de fixation (227, 227') assurant la fixation de la partie de fixation correspondante (220, 220'), cet ou ces parties de fixation formant au moins un décrochement (225, 225') entre la portion de découplage et le moyen de fixation du même guide de lumière.

12. Dispositif lumineux de véhicule selon la revendication 11, dans lequel un occulteur (230) est positionné en avant du ou des moyens de fixation (227, 227') du ou desdits guides de lumière (201, 201') de manière à occulter ce ou ces moyens de fixation pour un observateur extérieur audit dispositif lumineux.

13. Dispositif lumineux de véhicule selon l'une des revendications précédentes, comprenant ladite ou lesdites source(s) de lumière (251, 254) agencée(s) de manière à émettre des rayons lumineux au travers du ou desdits dioptre d'entrée (212, 212') .

14. Dispositif lumineux de véhicule selon la revendication 13, dans lequel ladite ou lesdites source(s) de lumière (251, 254) sont des diodes électroluminescentes.

15. Dispositif lumineux de véhicule selon l'une des revendications précédentes, dans lequel pour chacun desdits premier et deuxième guides de lumière (201, 201'), une première partie de rayons de lumière forme (R₁, R'₁), en sortant du dioptre principal de sortie (218, 218') du guide correspondant (201, 201'), une partie ou la totalité d'une fonction de signalisation et/ou d'éclairage de la route, notamment d'un feu stop, d'un indicateur de direction et/ou d'un feu de recul.

## Patentansprüche

1. Fahrzeugbeleuchtungsvorrichtung (260), die einen ersten Lichtleiter (201) und einen zweiten Lichtleiter (201') beinhaltet, die dazu bestimmt sind, jeweils mindestens einen Teil einer Beleuchtungsfunktion zu emittieren, wobei diese zwei Leiter zwei separate Teile sind, wobei der erste Lichtleiter Folgendes beinhaltet:
- einen Lichtleitungshauptteil (210), der ein Eingangsdiopter (212), das dazu bestimmt ist, Lichtstrahlen von einer Lichtquelle (251) zu empfangen, und ein Hauptausgangsdiopter (218) beinhaltet, wobei der Leitungshauptteil so angeordnet ist, dass ein Teil der Lichtstrahlen (R₁), die das Eingangsdiopter durchqueren, bis zu dem Hauptausgangsdiopter geleitet wird,
- einen Befestigungsteil (220), der diesen Hauptteil an dem zweiten Lichtleiter (201') befestigt und sich zwischen diesem Hauptteil und dem zweiten Leiter so erstreckt, dass einer der Leiter den anderen in der Beleuchtungsvorrichtung unterstützt.

2. Fahrzeugbeleuchtungsvorrichtung nach Anspruch 1, wobei der Befestigungsteil (220) einstückig mit dem Leitungshauptteil (210) ausgebildet ist.

3. Fahrzeugbeleuchtungsvorrichtung nach Anspruch 1 oder 2, wobei der Befestigungsteil (220) des ersten Lichtleiters (201) und der zweite Lichtleiter (201') ineinander gesteckt sind.

4. Fahrzeugbeleuchtungsvorrichtung nach einem der Ansprüche 1 bis 3, wobei der zweite Lichtleiter (201') ebenfalls einen Lichtleitungshauptteil (210') beinhaltet, der ein Eingangsdiopter (212'), das dazu bestimmt ist, Lichtstrahlen von einer anderen Lichtquelle (254) zu empfangen, und ein Hauptausgangsdiopter (218') beinhaltet, wobei dieser Leitungshauptteil (210') so angeordnet ist, dass ein erster Teil der Lichtstrahlen (R_{1'}), die das Eingangsdiopter durchqueren, bis zu dem Hauptausgangsdiopter geleitet wird.

5. Fahrzeugbeleuchtungsvorrichtung nach Anspruch 4, wobei der zweite Lichtleiter (201') ebenfalls einen Befestigungsteil (220') beinhaltet, der an dem ersten Lichtleiter (201) befestigt ist.

6. Fahrzeugbeleuchtungsvorrichtung nach Anspruch 5, wobei der Befestigungsteil (220') des zweiten Lichtleiters (201') an dem Befestigungsteil (220) des ersten Lichtleiters (201) befestigt ist.

7. Fahrzeugbeleuchtungsvorrichtung nach Anspruch 6, wobei der Befestigungsteil (220) von einem (201) der Lichtleiter eine Aufnahmeöse oder einen Aufnahmeschaft (227) beinhaltet, wobei der Befestigungsteil (220') des anderen (201') der Lichtleiter einen Zapfen oder einen Schaft (227'), der dazu fähig ist, in die Aufnahmeöse oder den Aufnahmeschaft (227) gesteckt zu werden, beinhaltet.

8. Fahrzeugbeleuchtungsvorrichtung nach Anspruch 7, wobei eine Befestigungsstange (234) sowohl die Aufnahmeöse bzw. den Aufnahmeschaft (227) als auch den steckbaren Zapfen bzw. Schaft (227') durchquert.

9. Fahrzeugbeleuchtungsvorrichtung nach einem der vorhergehenden Ansprüche, wobei der Befestigungsteil (220, 220') bei einem oder bei jedem Lichtleiter (201, 201') einstückig mit dem Leiter, der diesen Befestigungsteil beinhaltet, ausgebildet ist.

10. Fahrzeugbeleuchtungsvorrichtung nach Anspruch 9, wobei der oder die Befestigungsteile (220, 220') Lichtleitungssekundärteile bilden, wobei der Leitungshauptteil (210, 210') und der Befestigungsteil (220, 220') des ersten Lichtleiters (201) und/oder des zweiten Lichtleiters (201') so angeordnet sind, dass ein zweiter Teil der Lichtstrahlen (R₂; R₃), die das Eingangsdiopter des entsprechenden Leiters (212, 212') durchqueren, in das Innere des entsprechenden Befestigungsteils (220, 220') geleitet wird, wobei dieser letztere Entkopplungsmittel (200, 200') beinhaltet, die entlang eines Entkopplungsabschnitts dieses Befestigungsteils (220, 220') verteilt sind, sodass Strahlen (R₃) entlang dieses entweichen.

11. Beleuchtungsvorrichtung nach Anspruch 10, wobei der oder die Befestigungsteile (220, 220') ein Befestigungsmittel (227, 227') beinhalten, das die Befestigung des entsprechenden Befestigungsteils (220, 220') sicherstellt, wobei dieser oder diese Befestigungsteile mindestens einen Absatz (225, 225') zwischen dem Entkopplungsabschnitt und dem Befestigungsmittel desselben Lichtleiters bilden.

12. Fahrzeugbeleuchtungsvorrichtung nach Anspruch 11, wobei eine Abdeckung (230) vor dem oder den Befestigungsmitteln (227, 227') des oder der Lichtleiter (201, 201') positioniert ist, um dieses oder diese Befestigungsmittel für einen außerhalb der Beleuchtungsvorrichtung befindlichen Beobachter zu verdecken.

13. Fahrzeugbeleuchtungsvorrichtung nach einem der vorhergehenden Ansprüche, die die eine oder die mehreren Lichtquellen (251, 254) beinhaltet, die so angeordnet sind, dass sie Lichtstrahlen durch das oder die Eingangsdiopter (212, 212') emittieren.

14. Fahrzeugbeleuchtungsvorrichtung nach Anspruch 13, wobei die eine oder die mehreren Lichtquellen (251, 254) Elektrolumineszenzdioden sind.

15. Fahrzeugbeleuchtungsvorrichtung nach einem der vorhergehenden Ansprüche, wobei für jeden von dem ersten und dem zweiten Lichtleiter (201, 201') ein erster Teil von Lichtstrahlen (R₁, R'₁) beim Verlassen des Hauptausgangsdiopters (218, 218') des entsprechenden Leiters (201, 201') einen Teil oder die Gesamtheit einer Straßensignalisierungs- und/oder -beleuchtungsfunktion bildet, insbesondere ein Bremslicht, einen Richtungsanzeiger und/oder ein Rücklicht.

## Claims

1. A vehicle lighting device (260) comprising a first light guide (201) and a second light guide (201') each adapted to emit at least a part of a lighting function, said two guides being two separate parts, said first light guide comprising:
- a main light guide part (210) comprising an entry diopter (212) intended to receive light rays from a light source (251) and a main exit diopter (218), the main guide part being such that a portion of the light rays (R₁) passing through the entry diopter are guided to the main output diopter,
- a fixing part (220) fixing said main part to the second light guide (201') and extending between said main part and the second guide so that one of the guides supports the other one in said lighting device.

2. A vehicle lighting device as claimed in claim 1, in which the fixing part (220) is made in one piece with the main guide part (210).

3. The vehicle lighting device as claimed in claim 1 or 2, in which the fixing part (220) of the first light guide (201) and the second light guide (201') are nested one in the other.

4. The vehicle lighting device as claimed in any one of claims 1 to 3, in which the second light guide (201') also comprises a main light guide part (210') comprising an entry diopter (212') intended to receive light rays from another light source (254) and a main exit diopter (218'), said main guide part (210') being such that a first portion of the light rays (R_{1'}) passing through the entry diopter are guided to the main output diopter.

5. The vehicle lighting device as claimed in claim 4, in which the second light guide (201') also comprises a fixing part (220') fixed to the first light guide (201) .

6. The vehicle lighting device as claimed in claim 5, in which the fixing part (220') of the second light guide (201') is fixed to the fixing part (220) of the first light guide (201).

7. The vehicle lighting device as claimed in claim 6, in which the fixing part (220) of one light guide (201) comprises a receiving lug or stud (227), the fixing part (220') of the other light guide (201') comprising a tenon or a stud (227') adapted to nest in said receiving lug or stud (227) .

8. The vehicle lighting device as claimed in claim 7, in which a fixing rod (234) passes through both said receiving lug or said receiving stud (227) and said tenon or said stud (227') adapted to be nested.

9. The vehicle lighting device as claimed in any one of the preceding claims, in which said fixing part (220, 220') for one or for each light guide (201, 201') is made in one piece with the guide comprising that fixing part.

10. The vehicle lighting device as claimed in claim 9, in which said fixing part or parts (220, 220') form secondary light guide parts, the main guide part (210, 210') and the fixing part (220, 220') of the first light guide (201) and/or the second light guide (201') being such that a second portion of the light rays (R₂; R₃) passing through the entry diopter (212, 212') of the corresponding guide is guided inside the corresponding fixing part (220, 220'), the latter comprising coupling means (200, 200') arranged along a decoupling portion of said fixing part (220, 220') so that rays (R₃) escape along the latter.

11. The lighting device as claimed in claim 10, in which the fixing part or parts (220, 220') comprise a fixing means (227, 227') for fixing the corresponding fixing part (220, 220'), said fixing part or parts forming at least one step (225, 225') between the decoupling portion and the fixing means of the same light guide.

12. The vehicle lighting device as claimed in claim 11, in which an occulter (230) is positioned in front of the fixing means (227, 227') of said light guide or guides (201, 201') so as to occult said fixing means for an observer external to said lighting device.

13. The vehicle lighting device as claimed in any one of the preceding claims, comprising said light source or sources (251, 254) adapted to emit light rays through said entry diopter or diopters (212, 212').

14. The vehicle lighting device as claimed in claim 13, in which said light source or sources (251, 254) are light-emitting diodes.

15. The vehicle lighting device as claimed in any one of the preceding claims, in which a first light rays portion (R₁, R'₁) of each of said first and second light guides (201, 201') on leaving the main exit diopter (218, 218') of the corresponding guide (201, 201') forms all or part of a signaling and/or road lighting function, notably a stop light, turn indicator and/or reversing light function.
